# EUROPEAN PATENT APPLICATION

(11) **EP 3 958 489 A1**
(43) Date of publication of application: **23.02.2022**
(21) Application number: 19941450.9
(22) Date of filing: 15.08.2019
(51) Int. Cl.: H04L 1/08, H04W 52/02

(54) **DOWNLINK CONTROL INFORMATION MONITORING METHOD AND APPARATUS**

(71) Applicant: GUANGDONG OPPO MOBILE TELECOMMUNICATIONS CORP., LTD., Dongguan, Guangdong 523860 (CN)
(72) Inventor: SHI, Cong, Dongguan, Guangdong 523860 (CN); LIN, Yanan, Dongguan, Guangdong 523860 (CN)
(74) Representative: Taor, Simon Edward William
(86) International application number: PCT/CN2019/100870
(87) International publication number: WO 2021/026918

(57) **Abstract**

A method and an apparatus for monitoring downlink control information (DCI) are provided in the present disclosure. The present disclosure relates to the technical filed of wireless communication. According to the method, a discontinuous reception (DRX) target timer is started and the DCI is monitored during a duration of the DRX target timer, if an uplink resource for transmitting hybrid automatic repeat request (HARQ) feedback information is unavailable. In this way, a terminal device can monitor in time a downlink signaling retransmitted by a network device and feed back the HARQ feedback information to the network device based on the trigger of the downlink signaling, which can effectively ensure normal transmission of data, that is, the HARQ feedback information. In this way, not only power consumption of the terminal device can be considered, but also data transmission performance of the terminal device can be ensured.

## Description

### TECHNICAL FIELD

The present disclosure relates to the technical field of wireless communication, and in particular, to a method and an apparatus for monitoring downlink control information (DCI).

### BACKGROUND

In order to ensure that systems operating on an unlicensed spectrum can share resources on the unlicensed spectrum fairly, the third generation partnership project (3GPP) has introduced a listen before talk (LBT) mechanism to the application of license assisted access (LAA) technologies. According to the LBT mechanism, before accessing a channel on the unlicensed spectrum, a system can monitor the channel to determine whether the channel is in an idle state or in a busy state.

A discontinuous reception (DRX) mechanism is a technology that allows a terminal device to periodically enter a sleep mode and a wake up mode. When the terminal device is in the sleep mode, the terminal device does not monitor a channel. When the terminal device is in the wake up mode, the terminal device can monitor a channel. In this way, the power consumption of the terminal device can be reduced. By combining the LBT mechanism with the DRX mechanism, that is, applying the DRX mechanism in an unlicensed band, the power consumption of the terminal device can be effectively reduced.

In related art, a terminal device can receive, on a downlink resource indicated via downlink control information (DCI) transmitted by a network device, downlink data transmitted by the network device, generate hybrid automatic repeat request (HARQ) feedback information according to a result of decoding the downlink data, and feed back the HARQ feedback information to the network device through a uplink resource. Before transmitting the HARQ feedback information to the network device, the terminal device uses the LBT mechanism to detect or monitor the uplink resource. If the terminal device monitors that the uplink resource is busy, the network device will transmit DCI again to indicate a new uplink resource for transmitting the HARQ feedback information. However, in related art, if the terminal device monitors that the uplink resource is busy so that the network device cannot receive the HARQ feedback information in time, it is difficult to ensure normal transmission of the HARQ feedback information.

### SUMMARY

In implementations of the present disclosure, a method and an apparatus for monitoring downlink control information (DCI) are provided, so as to provide a technical solution for a problem in related art that it is difficult to ensure normal transmission of hybrid automatic repeat request (HARQ) feedback information. The technical solution is as follows.

In an aspect, a method for monitoring DCI is provided. The method includes the following. A discontinuous reception (DRX) target timer is started and the DCI is monitored during a duration of the DRX target timer, if an uplink resource for transmitting HARQ feedback information is unavailable.

In another aspect, an apparatus for monitoring DCI is provided. The apparatus includes a processing module. The processing module is configured to start a discontinuous reception (DRX) target timer and monitor the DCI during a duration of the DRX target timer, if an uplink resource for transmitting HARQ feedback information is unavailable.

In another aspect, a terminal device is provided. The terminal device includes a processor and a memory. The memory stores at least one instruction configured to be executed by the processor to implement the method for monitoring DCI described above.

In another aspect, a computer-readable storage medium is provided. The computer-readable storage medium stores at least one instruction configured to be executed by a processor to implement the method for monitoring DCI described above.

In another aspect, a chip is provided. The chip includes a programmable logic circuit and/or a program instruction. When running, the chip is configured to implement the method for monitoring DCI described above.

In another aspect, a computer program product is provided. The computer program product stores at least one instruction configured to be executed by a processor to implement the method for monitoring DCI described above.

The technical solution provided in implementations of the present disclosure can achieve at least the following beneficial effects. If the uplink resource for transmitting the HARQ feedback information is unavailable, the DRX target timer can be started, and the DCI can be monitored during the duration of the DRX target timer. In this way, the terminal device can monitor in time a downlink signaling retransmitted by a network device and feed back the HARQ feedback information to the network device in time based on the trigger of the downlink signaling, which can effectively ensure normal transmission of data, that is, the HARQ feedback information. In this way, not only power consumption of the terminal device can be considered, but also data transmission performance of the terminal device can be ensured.

### BRIEF DESCRIPTION OF THE DRAWINGS

To describe technical solutions in implementations of the present disclosure more clearly, the following briefly introduces accompanying drawings required for illustrating the implementations. Apparently, the accompanying drawings in the following description illustrate some implementations of the present disclosure. Those of ordinary skill in the art may also obtain other drawings based on these accompanying drawings without creative efforts.
FIG. 1 is a schematic diagram illustrating a discontinuous reception (DRX) cycle according to implementations of the present disclosure.
FIG. 2 is a schematic diagram illustrating an implementation environment according to implementations of the present disclosure.
FIG. 3 is a flow chart illustrating a method for monitoring downlink control information (DCI) according to implementations of the present disclosure.
FIG. 4 is a flow chart illustrating a method for monitoring DCI according to other implementations of the present disclosure.
FIG. 5 is a schematic diagram illustrating monitoring DCI by starting a DRX target timer according to implementations of the present disclosure.
FIG. 6 is a schematic diagram illustrating monitoring DCI by starting a DRX target timer according to other implementations of the present disclosure.
FIG. 7 is a schematic diagram illustrating monitoring DCI by starting a DRX target timer according to other implementations of the present disclosure.
FIG. 8 is a block diagram illustrating an apparatus for monitoring DCI according to implementations of the present disclosure.
FIG. 9 is a block diagram illustrating an apparatus for monitoring DCI according to other implementations of the present disclosure.
FIG. 10 is a block diagram illustrating an apparatus for monitoring DCI according to other implementations of the present disclosure.
FIG. 11 is a block diagram illustrating a terminal device according to implementations of the present disclosure.

### DETAILED DESCRIPTION

In order to make the purpose, technical solution, and advantages of the present disclosure more clear, implementations of the present disclosure will be further described in detail in combination with the accompanying drawings.

A project of new radio (NR) unlicensed (NR-U) is agreed by the third generation partnership project (3GPP) radio access network (RAN) working group in December, 2018. The project aims to allow an NR cell to work in an unlicensed band. Example working scenarios where an NR cell works in an unlicensed band may include: a carrier aggregation scenario, where a primary cell (PCell) working on a licensed spectrum is aggregated with a secondary cell (SCell) working on an unlicensed spectrum in a carrier aggregation manner; a dual-connectivity working scenario, where the PCell works on a long term evolution (LTE) licensed spectrum and the SCell works on an NR unlicensed spectrum; and a standalone working scenarios, where the NR cell works independently on an unlicensed spectrum.

An NR-U band may include an unlicensed spectrum of 5 gigahertz (GHz) and an unlicensed spectrum of 6 GHz. In design of an NR-U unlicensed spectrum, in order to ensure that a system accessing the unlicensed spectrum and another system that has been working on the unlicensed spectrum can share resources on the unlicensed spectrum fairly, a coexistence mechanism, such as an energy detection mechanism, can be provided for the resources on the unlicensed spectrum. The energy detection mechanism may be a listen before talk (LBT) mechanism. According to the LBT mechanism, before transmitting data to a receiving device on a channel on an unlicensed spectrum, a transmitting device can detect the channel for a period of time. If the detection result indicates that the channel is idle, the transmitting device can transmit data to the receiving device. If the detection result indicates that the channel is occupied, the transmitting device can back off for a period of time according to a rule and then further monitor the channel until the channel is idle, and then the transmitting device can transmit data to the receiving device.

It can be noted that monitoring a channel refers to monitoring information or data carried in the channel. For example, monitoring a physical downlink control channel (PDCCH) refers to monitoring DCI carried in the PDCCH.

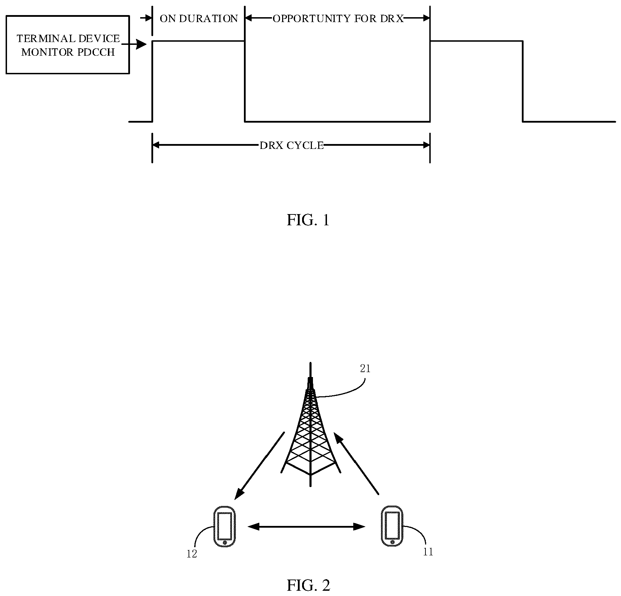

According to the DRX mechanism, a DRX cycle is configured for a terminal device in a radio resource control-connected (RRC_CONNECTED) state. FIG. 1 is a schematic diagram illustrating a DRX cycle. In the DRX cycle, a terminal device monitors a channel during a duration marked as "On Duration", i.e., the terminal device is in a wake up mode during the duration marked as "On Duration". In the DRX cycle, the terminal device does not monitor a channel during a duration marked as "Opportunity for DRX", i.e., the terminal device is in a sleep mode during the duration marked as "Opportunity for DRX"."Opportunity for DRX" can also be called "off duration" or "off state".

A network device can control the DRX cycle for the terminal device by configuring timer parameters. The timer parameters can include the following.
1) *drx-onDurationTimer,* a DRX-on-duration timer. The terminal device starts *drx-onDurationTimer* in a fixed DRX cycle and monitors a PDCCH during a duration of *drx-onDurationTimer.*
2) *drx-InactivityTimer,* a DRX-inactivity timer. *drx-InactivityTimer* is started or restarted when the terminal device successfully decodes a PDCCH and the PDCCH is scheduled for an initial transmission, and the terminal device monitors a PDCCH during a duration of *drx-InactivityTimer.*
3) *drx-RetransmissionTimerDL,* a DRX-retransmission timer for downlink (DL). The terminal device maintains *drx-RetransmissionTimerDL* separately for each DL HARQ process. If the terminal device determines that demodulation of data of a corresponding HARQ process fails, the terminal device starts *drx-RetransmissionTimerDL* in response to expiration of *drx-HARQ-round-trip time (RTT)-TimerDL.* The terminal device monitors a PDCCH during a duration of *drx-RetransmissionTimerDL.* The behavior of *drx-HARQ-RTT-TimerDL* is described as follows.
4) *drx-RetransmissionTimerUL,* a DRX-retransmission timer for uplink (UL). The terminal device maintains *drx-RetransmissionTimerUL* separately for each UL HARQ process. *drx-RetransmissionTimerUL* is started in response to expiration of *drx-HARQ-RTT-TimerUL.* The terminal device monitors a PDCCH during a duration of *drx-RetransmissionTimerUL.*
5) *drx-LongCycle,* a DRX-long cycle. This timer parameter indicates a long DRX cycle.
6) *drx-HARQ-RTT-TimerDL,* a DRX-HARQ-RTT timer for DL. This timer parameter is maintained separately for each DL HARQ process. *drx-HARQ-RTT-TimerDL* is started at a first symbol after a resource for transmitting a HARQ feedback. The terminal device may not monitor a PDCCH during a duration of *drx-HARQ-RTT-TimerDL.*
7) *drx-HARQ-RTT-TimerUL,* a DRX-HARQ-RTT timer for UL. This timer parameter is maintained separately for each UL HARQ process. *drx-HARQ-RTT-TimerUL* is started at a first symbol after a transmission resource for the terminal device to transmit data. The terminal device does not need to monitor a PDCCH during a duration of *drx-HARQ-RTT-TimerUL.*

In related art, a terminal device can receive DCI transmitted by a network device, and feed back HARQ feedback information for certain downlink data on a time-frequency resource indicated via the DCI. The HARQ feedback information may include an acknowledgement (ACK) or a negative acknowledgement (NACK). After feeding back the HARQ feedback information, the terminal device starts *drx-HARQ-RTT-TimerDL* and stops *drx-Retransmission-TimerDL.* The terminal device does not monitor a PDCCH during the operation of *drx-HARQ-RTT-TimerDL.* At expiration of *drx-HARQ-RTT-TimerDL,* if the terminal device fails to decode the downlink data, the terminal device starts *drx-RetransmissionTimerDL.* The terminal device monitors DCI for retransmitting the downlink data during the operation of *drx-RetransmissionTimerDL.*

It can be noted that, according to the technical solution described in implementations of the present disclosure, if HARQ feedback information in a HARQ mechanism in a terminal device is triggered, the terminal device feeds back the HARQ feedback information to a network device.

In an NR-U system, a terminal device can be triggered by a downlink signaling transmitted by a network device to transmit HARQ feedback information for certain downlink data to the network device. For example, the downlink signaling is DCI. That is, the network device transmits the downlink signaling which triggers the terminal device to transmit the HARQ feedback information to the network device. If the network device does not receive the HARQ feedback information triggered by the downlink signaling due to a busy channel (i.e., LBT failure), the network device can transmit another downlink signaling to trigger the HARQ feedback information again.

In the above description, for a situation where transmission of the HARQ feedback information fails due to LBT failure, there is no clear regulation on how to implement the DRX mechanism. That is, in related art, there is no regulation on how to apply the DRX mechanism in the situation where the transmission of the HARQ feedback information fails due to LBT failure. As a result, *drx-Retransmission-TimerDL* in the DRX mechanism will not be triggered to start, so the terminal device will enter a sleep mode in the DRX cycle, which may further cause the terminal device to be unable to monitor in time a downlink signaling retransmitted by the network device. According to implementations of the present disclosure, a method for monitoring DCI is provided to solve a problem in related art that a terminal device cannot monitor in time a downlink signaling retransmitted by a network device.

FIG. 2 is a schematic diagram illustrating an implementation environment according to implementations of the present disclosure. The implementation environment includes a terminal device 11, a terminal device 12, and a network device 21. The terminal device 11 and the terminal device 12 can both communicate with the network device 21. The terminal device 11 transmits uplink data to the network device 21. The network device 21 transmits downlink data to the terminal device 12. A downlink transmission link is formed between the network device 21 and the terminal device 12. After the network device 21 transmits downlink data to the terminal device 12 on the downlink transmission link, the terminal device 12 decodes the downlink data and feeds back HARQ feedback information generated from a result of decoding the downlink data to the network device. Implementations of the present disclosure mainly focus on the downlink transmission link. Of course, the terminal device 12 can also communicate with the terminal device 11, which is not limited herein. The terminal device may be user equipment (UE).

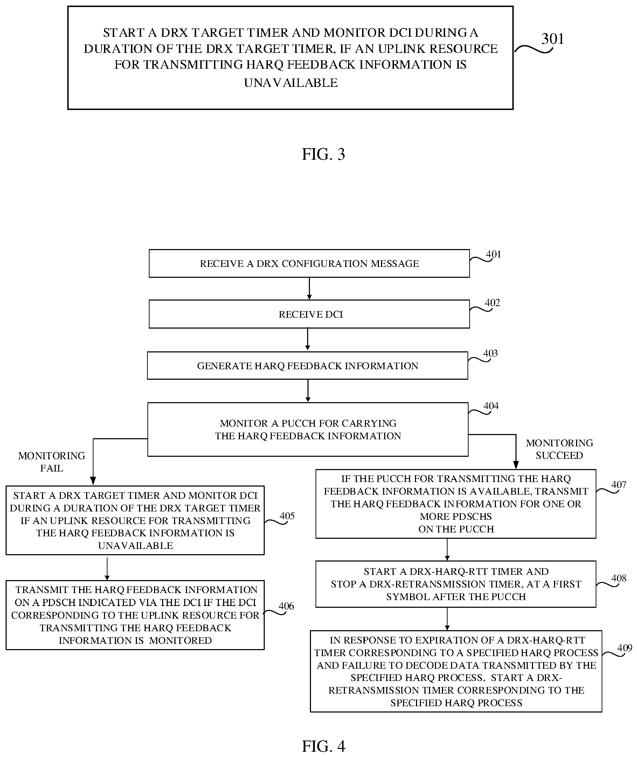

FIG. 3 is a flow chart illustrating a method for monitoring DCI according to implementations of the present disclosure. The method includes the following.

At block 301, a DRX target timer is started and the DCI is monitored during a duration of the DRX target timer, if an uplink resource for transmitting HARQ feedback information is unavailable.

The uplink resource can be a physical uplink control channel (PUCCH).

In summary, according to the method for monitoring DCI provided in implementations of the present disclosure, if the uplink resource for transmitting the HARQ feedback information is unavailable, the DRX target timer can be started for monitoring the DCI. In this way, a terminal device can monitor in time a downlink signaling retransmitted by a network device and feed back the HARQ feedback information to the network device in time based on the trigger of the downlink signaling, which can effectively ensure normal transmission of data, that is, the HARQ feedback information. In this way, not only power consumption of the terminal device can be considered, but also data transmission performance of the terminal device can be ensured.

The DCI may include first dedicated DCI, second dedicated DCI, third dedicated DCI, or common DCI. The first dedicated DCI contains an uplink grant. The uplink grant can be used to schedule uplink data. The second dedicated DCI contains a downlink assignment. The downlink assignment can be used to schedule downlink data. The third dedicated DCI does not contain the uplink grant or the downlink assignment, and is neither used to schedule uplink data nor to schedule downlink data. The common DCI is destinated for a certain group of terminal devices. Each group may include at least one terminal device. The common DCI is used to schedule uplink data of multiple terminal devices in the group and/or schedule downlink data of multiple terminal devices in the group.

In an example, the DCI includes an indication field. The indication field may instruct a terminal device to trigger HARQ feedback (or HARQ feedback for a group). The indication field can be called dynamic indication information. The dynamic indication information may trigger feedback on a physical downlink shared channel (PDSCH) or feedback on multiple PDSCHs. Some examples are provided below.
1. If the dynamic indication information indicates data feedback for multiple PDSCHs, the multiple PDSCHs may correspond to a same group.
2. If the dynamic indication information indicates data feedback for multiple PDSCHs, the multiple PDSCHs may correspond to different groups.
3. Which group a PDSCH belongs to is indicated in DCI corresponding to the PDSCH.

In an example, the dynamic indication information may contain group information corresponding to the data feedback. The dynamic indication information also may contain PUCCH information.

According to the method for monitoring DCI described in implementations of the present disclosure, there are two situations where a uplink resource for transmitting HARQ feedback information is determined to be unavailable. In a first situation, the uplink resource being unavailable means that the uplink resource is busy. In a second situation, the uplink resource being unavailable means that the uplink resource is conflicted and discarded.

For the first situation, determine that the uplink resource for transmitting the HARQ feedback information is unavailable as follows.

At S1, a channel state of the uplink resource for transmitting the HARQ feedback information is detected.

For example, the channel state can be monitored through energy detection. If the channel has a signal strength greater than a specified threshold, the uplink resource is determined to be in a busy state. Otherwise, the uplink resource is determined to be in an idle state. The specified threshold may be predetermined by the terminal device.

At S2, determine that the uplink resource is unavailable if the uplink resource is in a busy state.

At S3, the DRX target timer is started and the DCI is monitored during the duration of the DRX target timer, if the uplink resource for transmitting the HARQ feedback information is unavailable.

If the uplink resource is unavailable, the terminal device starts the DRX target timer in time for monitoring the DCI, to monitor in time new DCI transmitted by the network device. The new DCI indicates another uplink resource corresponding to the HARQ feedback information that is not yet transmitted due to the unavailability of the uplink resource for transmitting the HARQ feedback information. In this way, data transmission performance can be ensured.

For the second situation, determine that the uplink resource for transmitting the HARQ feedback information is unavailable as follows.

At S4, determine that the uplink resource is unavailable if the HARQ feedback information conflicts with another service on the uplink resource and the another service has a higher service priority than the HARQ feedback information.

If another service has a higher service priority than the HARQ feedback information, the uplink resource will be used to transmit service data of the another service, so that the uplink resource will be in a busy state. Therefore, the uplink resource in this case can also be determined to be unavailable.

At S5, the DRX target timer is started and the DCI is monitored during the duration of the DRX target timer, if the uplink resource for transmitting the HARQ feedback information is unavailable.

The second situation may occur in the following scenario. If the uplink resource for transmitting the HARQ feedback information conflicts with a resource for transmitting other data in time domain, a physical layer of the terminal device may discard the uplink resource for transmitting the HARQ feedback information. For example, if the uplink resource for transmitting the HARQ feedback information is on an enhanced mobile broadband (eMBB) channel, when the uplink resource is transmitted, the network device will schedule an ultra-reliable and low latency communication (URLLC) channel. Resources transmitted on the URLLC channel overlap with resources transmitted on the eMBB channel on time domain. Since the terminal device cannot transmit two uplink resources at the same time, the terminal device may discard the eMBB channel. In this case, the DRX target timer can be started for monitoring the DCI.

According to the method for monitoring DCI described in implementations of the present disclosure, the DRX target timer can be started for monitoring the DCI in the following three manners.

In a first manner, DRX active time is set for monitoring the DCI. During the DRX active time, the terminal device can monitor the DCI.

In a second manner, an additional timer is set and the terminal device can monitor the DCI during the timing of the additional timer.

In a third manner, a DRX-HARQ-RTT timer and a DRX-retransmission timer can be started, and the DCI is monitored during a duration of the DRX-retransmission timer started in response to expiration of the DRX-HARQ-RTT-timer.

FIG. 4 is a flow chart illustrating a method for monitoring DCI according to other implementations of the present disclosure. The method is illustrated in combination with the three manners and is performed by a terminal device.

At block 401, a DRX configuration message is received.

The DRX configuration message is transmitted by a network device. The DRX configuration message can be configured via an RRC signaling. That is, the network device may transmit the RRC signaling to the terminal device, and the RRC signaling contains the DRX configuration message. The terminal device configures its own DRX mechanism according to the DRX configuration message received.

For example, the DRX configuration message may at least include configuration for the following timer parameters: *drx-onDurationTimer, drx-InactivityTimer, drx-HARQ-RTT-TimerDL, drx-HARQ-RTT-TimerUL, drx-RetransmissionTimerDL, drx-RetransmissionTimerUL,* and *drx-LongCycleStartOffset* which indicates a DRX-long-cycle start offset.

*drx-LongCycleStartOffset* can indicate a DRX-long cycle and a DRX-start offset.

At block 402, DCI is received.

The DCI can indicate a downlink resource to schedule downlink data. The DCI can indicate the downlink resource allocated by the network device for the downlink data, so that the terminal device can use the downlink resource to receive the downlink data. It can be noted that the downlink resource allocated for the downlink data can be regarded as a physical downlink shared channel (PDSCH) allocated for the downlink data. DCI may be in one-to-one correspondence with PDSCHs. That is, one piece of DCI may indicate one PDSCH, that is, one downlink resource.

The DCI may include dynamic indication information transmitted by the network device to the terminal device. The dynamic indication information may be a trigger signaling transmitted by the network device to the terminal device. The trigger signaling is used to trigger the terminal device to generate HARQ feedback information.

At block 403, HARQ feedback information is generated.

The terminal device generates the HARQ feedback information for the downlink data according to the dynamic indication information from the network device. Downlink data may be in a one-to-one correspondence with HARQ processes. That is, PDSCHs may be in one-to-one correspondence with HARQ processes. Each terminal device can generate multiple pieces of HARQ feedback information according to multiple HARQ processes respectively.

The dynamic indication information may trigger the terminal device to generate one piece of HARQ feedback information for one PDSCH. Alternatively, the dynamic indication information may trigger the terminal device to generate multiple pieces of HARQ feedback information for multiple PDSCHs. The multiple PDSCHs may correspond to one group or multiple groups, and each group can be distinguished by a group identifier (ID).

The dynamic indication information may contain group information, for example, a group ID corresponding to a HARQ process transmitting the HARQ feedback information, and the dynamic indication information may contain a PUCCH for carrying the HARQ feedback information.

At block 404, the PUCCH for carrying the HARQ feedback information is monitored. If the monitoring fails, proceed to block 405. If the monitoring succeeds, proceed to block 407.

After the HARQ feedback information is generated and before the HARQ feedback information is transmitted, the terminal device monitors the PUCCH for carrying the HARQ feedback information. At block 404, if the monitoring fails, which means that the PUCCH is occupied or conflicted and discarded, reference can be made to the foregoing two situations where the uplink resource is unavailable.

At S405, a DRX target timer is started for monitoring DCI if an uplink resource for transmitting the HARQ feedback information is unavailable.

Since the uplink resource for transmitting the HARQ feedback information is unavailable, the network device cannot receive the HARQ feedback information in time. In this case, the network device will transmit DCI again to trigger the terminal device to transmit the HARQ feedback information again. In order to ensure data transmission performance, the terminal device may monitor the DCI in time to avoid a situation where the terminal device enters a sleep mode in the DRX mechanism and cannot feed back the HARQ feedback information in time.

The DRX target timer can be started for monitoring the DCI in the following three manners.

In a first manner, if the uplink resource is unavailable, the DCI can be monitored during DRX active time, and the DRX active time includes time after the uplink resource. That is, if the uplink resource is unavailable, the time after the uplink resource is determined as the DRX active time, and the DCI is monitored during the DRX active time.

The terminal device continuously monitors the DCI during the DRX active time. The DCI may trigger or schedule another uplink resource for data transmission. The another uplink resource carries at least the HARQ feedback information that is not yet transmitted due to the unavailability of the uplink resource for transmitting the HARQ feedback information.

Based on the correspondence among PDSCHs, HARQ processes, and groups described with respect to the operation at block 403, it can be further concluded that PDSCHs and corresponding HARQ processes thereof can correspond to groups through the terminal device. For example, multiple PDSCHs may correspond to a same group, or multiple PDSCHs may correspond to multiple different groups. Regardless of whether the multiple PDSCHs correspond to the same group or multiple different groups, the multiple PDSCHs can all be indicated via corresponding DCI.

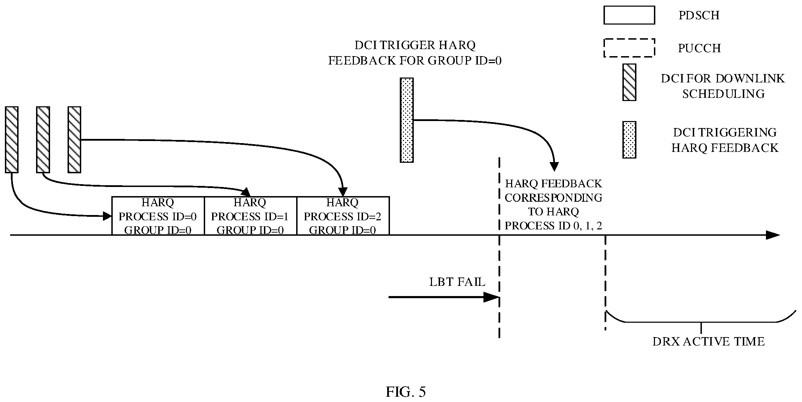

FIG. 5 is a schematic diagram illustrating monitoring DCI by starting a DRX target timer according to implementations of the present disclosure. In FIG. 5, take multiple PDSCHs, i.e., multiple HARQ processes, corresponding to a same group as an example. DCI received by a terminal device indicates a group ID, and the DCI can trigger the terminal device to generate HARQ feedback information for HARQ processes. In FIG. 5, three pieces of DCI for scheduling downlink resources, i.e., three pieces of DCI for downlink scheduling, can respectively indicate three HARQ processes with ID 0, 1, and 2. The three HARQ processes all correspond to a group with ID 0. The DCI can trigger terminal devices in the group with ID 0 to transmit corresponding HARQ feedback information. That is, the terminal devices in the group with ID 0 may transmit corresponding HARQ feedback information according to the three HARQ processes respectively. The HARQ feedback information is transmitted on an uplink resource. Each terminal device performs LBT for a corresponding uplink resource. If the LBT fails, the terminal device will regard time after the PDCCH resource for feeding back the HARQ feedback information as DRX active time, and continue to monitor DCI for triggering the terminal device to transmit the HARQ feedback information after the DRX active time.

In a second manner, a DRX additional timer is started at a first symbol after the uplink resource and the DCI is monitored during a duration of the DRX additional timer, if the uplink resource is unavailable.

The terminal device monitors the DCI during the operation of the DRX additional timer. The DCI can trigger or schedule another uplink resource for transmission. The another uplink resource carries at least the HARQ feedback information that is not yet transmitted due to the unavailability of the uplink resource for transmitting the HARQ feedback information.

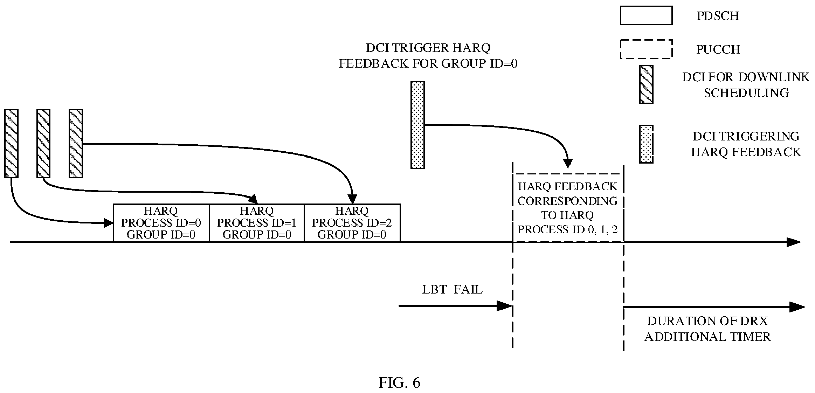

FIG. 6 is a schematic diagram illustrating monitoring DCI by starting a DRX target timer according to other implementations of the present disclosure. Similar to FIG. 5, in FIG. 6, take multiple PDSCHs, i.e., multiple HARQ processes, corresponding to a same group as an example. DCI received by a terminal device indicates a group ID, and the DCI can trigger the terminal device to generate HARQ feedback information for HARQ processes. In FIG. 6, three pieces of DCI for scheduling downlink resources, i.e., three pieces of DCI for downlink scheduling, can respectively indicate three HARQ processes with ID 0, 1, and 2. The three HARQ processes all correspond to a group with ID 0. The DCI can trigger terminal devices in the group with ID 0 to transmit corresponding HARQ feedback information. That is, the terminal devices in the group with ID 0 may transmit corresponding HARQ feedback information for the three HARQ processes respectively. The HARQ feedback information is transmitted on an uplink resource. Each terminal device performs LBT for a corresponding uplink resource. If the LBT fails, the terminal device will start the DRX additional timer after the corresponding uplink resource, and continue to monitor DCI for triggering the terminal device to transmit the HARQ feedback information during the duration of the DRX additional timer.

In a third manner, a DRX-HARQ-RTT timer is started at the first symbol after the uplink resource if the uplink resource is unavailable, and a DRX-retransmission timer is started and the DCI is monitored during a duration of the DRX-retransmission timer, in response to expiration of the DRX-HARQ-RTT timer.

Among the timer parameters included in the DRX mechanism, the terminal device will be in a wake up mode during the duration of the DRX-retransmission timer and can monitor a channel. Therefore, according to implementations of the present disclosure, the DCI can be monitored by using the DRX-retransmission timer.

PDSCHs may be in one-to-one correspondence with HARQ processes. A DRX-HARQ-RTT timer and a DRX-retransmission timer are set for each HARQ process correspondingly. Therefore, if one or more PDSCHs are transmitted, for each PDSCH, a DRX-HARQ-RTT timer maintained by a HARQ process corresponding to the PDSCH is started at a first symbol after the PUCCH. Then, in response to expiration of the DRX-HARQ-RTT timer, a DRX-retransmission timer maintained by the HARQ process is started, and the DCI is monitored during a duration of the DRX-retransmission timer.

The terminal device monitors the DCI during the duration of the DRX-retransmission timer. The DCI can trigger or schedule another uplink resource for transmission. The another uplink resource carries at least the HARQ feedback information that is not yet transmitted due to the unavailability of the uplink resource for transmitting the HARQ feedback information.

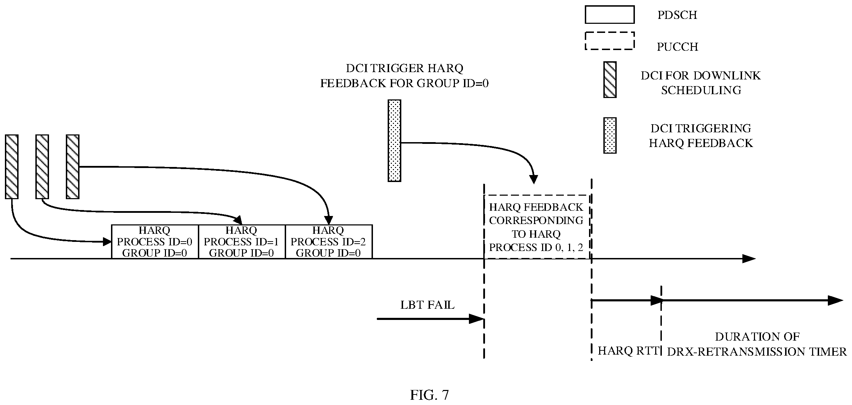

FIG. 7 is a schematic diagram illustrating monitoring DCI by starting a DRX target timer according to other implementations of the present disclosure. Similar to FIG. 5 or FIG. 6, in FIG. 7, take multiple PDSCHs, i.e., multiple HARQ processes, corresponding to a same group as an example. DCI received by a terminal device indicates a group ID, and the DCI can trigger the terminal device to generate HARQ feedback information for HARQ processes. In FIG. 7, three pieces of DCI for scheduling downlink resources, i.e., three pieces of DCI for downlink scheduling, can respectively indicate three HARQ processes with ID 0, 1, and 2. The three HARQ processes all correspond to a group with ID 0. The DCI can trigger terminal devices in the group with ID 0 to transmit corresponding HARQ feedback information. That is, the terminal devices in the group with ID 0 may transmit corresponding HARQ feedback information for the three HARQ processes respectively. The HARQ feedback information is transmitted on an uplink resource. Each terminal device performs LBT for a corresponding uplink resource. If the LBT fails, the terminal device will start, at least for one HARQ process, a DRX-HARQ-RTT timer. In response to expiration of the DRX-HARQ-RTT timer, a DRX-retransmission timer of the HARQ process is started, and DCI for triggering the terminal device to transmit the HARQ feedback information is monitored during a duration of the DRX-retransmission timer.

It can be noted that the "uplink resource unavailable" may refer to that a media access control (MAC) layer receives a physical layer indication indicating that LBT for a PUCCH resource fails.

At block 406, the HARQ feedback information is transmitted on a PDSCH indicated via the DCI if the DCI corresponding to the uplink resource for transmitting the HARQ feedback information is monitored.

At block 407, if the PUCCH for transmitting the HARQ feedback information is available, the HARQ feedback information for one or more PDSCHs is transmitted on the PUCCH.

If the monitoring of the PUCCH for carrying the HARQ feedback information succeeds, the PUCCH may be used to transmit the HARQ feedback information for the one or more PDSCHs.

At block 408, a DRX-HARQ-RTT timer is started and a DRX-retransmission timer is stopped, at a first symbol after the PUCCH.

If one or more PDSCHs are transmitted, for each PDSCH, a DRX-HARQ-RTT timer maintained by a HARQ process corresponding to the PDSCH is started and a DRX-retransmission timer maintained by the HARQ process corresponding to the PDSCH is stopped, at a first symbol after the PUCCH.

At block 409, in response to expiration of a DRX-HARQ-RTT timer corresponding to a specified HARQ process and failure to decode data transmitted by the specified HARQ process, a DRX-retransmission timer corresponding to the specified HARQ process is started.

The specified HARQ process can be any one of HARQ processes corresponding to one or more PDSCHs. The DRX-retransmission timer corresponding to the specified HARQ process can be started in response to two factors: 1) the expiration of the DRX-HARQ-RTT timer corresponding to the specified HARQ process; and 2) the failure to decode the data transmitted by the specified HARQ process. When both factors are satisfied, the DRX-retransmission timer can be started.

In summary, according to the method for monitoring DCI provided in implementations of the present disclosure, if the uplink resource for transmitting the HARQ feedback information is unavailable, the DRX target timer can be started for monitoring the DCI. In this way, a terminal device can monitor in time a downlink signaling retransmitted by a network device and feed back the HARQ feedback information to the network device in time based on the trigger of the downlink signaling, which can effectively ensure the normal transmission of data, that is, the HARQ feedback information. In this way, not only power consumption of the terminal device can be considered, but also data transmission performance of the terminal device can be ensured in an NR-U system.

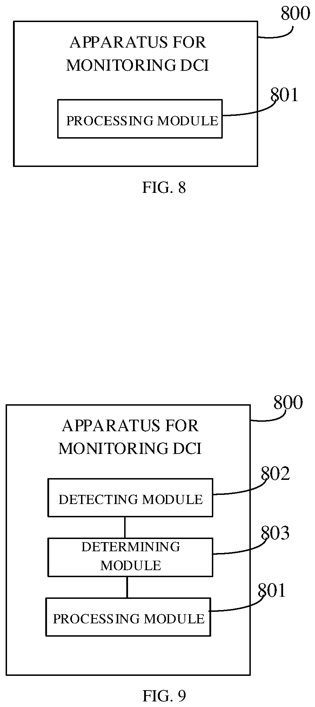

FIG. 8 is a block diagram illustrating an apparatus for monitoring DCI according to implementations of the present disclosure. The apparatus 800 includes a processing module 801.

The processing module 801 is configured to start a DRX target timer and monitor the DCI during a duration of the DRX target timer, if an uplink resource for transmitting HARQ feedback information is unavailable.

In summary, according to the apparatus for monitoring DCI provided in implementations of the present disclosure, if the uplink resource for transmitting the HARQ feedback information is unavailable, the DRX target timer can be started for monitoring the DCI. In this way, a terminal device can monitor in time a downlink signaling retransmitted by a network device and feed back the HARQ feedback information to the network device in time based on the trigger of the downlink signaling, which can effectively ensure the normal transmission of data, that is, the HARQ feedback information. In this way, not only power consumption of the terminal device can be considered, but also data transmission performance of the terminal device can be ensured in an NR-U system.

In some implementations, if the uplink resource is unavailable, the processing module 801 is configured to determine time after the uplink resource as DRX active time and monitor the DCI during the DRX active time. That is, the processing module 801 is configured to monitor the DCI during the DRX active time if the uplink resource is unavailable, where the DRX active time includes time after the uplink resource.

In some implementations, the processing module 801 is configured to start a DRX additional timer at a first symbol after the uplink resource and monitor the DCI during a duration of the DRX additional timer, if the uplink resource is unavailable.

In some implementations, the processing module 801 is configured to start a DRX-HARQ-RTT timer at a first symbol after the uplink resource if the uplink resource is unavailable, and start a DRX-retransmission timer and monitor the DCI during a duration of the DRX-retransmission timer, in response to expiration of the DRX-HARQ-RTT timer.

In some implementations, the DCI includes first dedicated DCI containing an uplink grant, second dedicated DCI containing a downlink assignment, third dedicated DCI without the uplink grant and the downlink assignment, or common DCI.

In some implementations, as illustrated in FIG. 9, the apparatus 800 further includes a detecting module 802 and a determining module 803. The detecting module 802 is configured to detect a channel state of the uplink resource for transmitting the HARQ feedback information, and the determining module 803 is configured to determine that the uplink resource is unavailable if the uplink resource is in a busy state. Alternatively, the determining module 803 is configured to determine that the uplink resource is unavailable if the HARQ feedback information conflicts with another service on the uplink resource and the another service has a higher service priority than the HARQ feedback information.

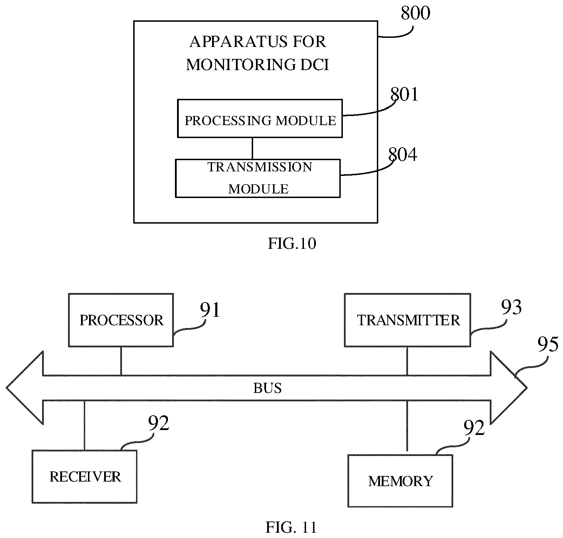

In some implementations, as illustrated in FIG. 10, the apparatus 800 further includes a transmission module 804. The transmission module 804 is configured to transmit the HARQ feedback information on the uplink resource indicated via the DCI if the DCI corresponding to the uplink resource for transmitting the HARQ feedback information is monitored.

FIG. 11 is a block diagram illustrating a terminal device according to implementations of the present disclosure. The terminal device includes a processor 91, a receiver 92, a transmitter 93, a memory 94, and a bus 95.

The processor 91 includes one or more processing cores, and the processor 91 executes various functional applications and information processes by running software programs and modules.

The receiver 92 and the transmitter 93 can be implemented as a communication component. The communication component can be a communication chip. The communication chip can include a receiving module, a transmitting module, a modem module, etc., and is configured to modulate and/or demodulate information, and receive or transmit information via wireless signals.

The memory 94 is connected to the processor 91 via a bus 95.

The memory 94 may be configured to store at least one instruction. The processor 91 is configured to execute the at least one instruction to implement operations of the foregoing methods.

In addition, the memory 94 can be implemented by any type of volatile or nonvolatile storage device, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk, or a combination thereof.

A computer-readable storage medium is provided. The computer-readable storage medium stores at least one instruction. The at least one instruction is loaded and executed by a processor to implement the method for monitoring DCI according to implementations of the present disclosure.

A computer program product is provided. When running on a computer, the computer program product causes the computer to execute the method for monitoring DCI according to implementations of the present disclosure.

A chip is provided. The chip includes a programmable logic circuit and/or a program instruction. When running, the chip is configured to implement the method for monitoring DCI according to implementations of the present disclosure.

Those of ordinary skill in the art can understand that all or part of operations in implementations of the present disclosure can be implemented by hardware or by a program to instruct the hardware. The program can be stored in a computer-readable storage medium, which can be a read-only memory, a magnetic disk, or an optical disk, etc.

The above descriptions are only some implementations of the present disclosure and are not intended to limit the present disclosure. Any modification, alternative, improvement, etc., without departing from the spirit and principle of the present disclosure are consider to be within the scope of the present disclosure.

## Claims

1. A method for monitoring downlink control information (DCI), comprising:
starting a discontinuous reception (DRX) target timer and monitoring the DCI during a duration of the DRX target timer, in response to an uplink resource for transmitting hybrid automatic repeat request (HARQ) feedback information being unavailable.

2. The method of claim 1, wherein in response to the uplink resource for transmitting the HARQ feedback information being unavailable, starting the DRX target timer and monitoring the DCI during the duration of the DRX target timer, comprises:
monitoring the DCI during DRX active time in response to the uplink resource being unavailable, wherein the DRX active time comprises time after the uplink resource.

3. The method of claim 1, wherein in response to the uplink resource for transmitting the HARQ feedback information being unavailable, starting the DRX target timer and monitoring the DCI during the duration of the DRX target timer, comprises:
starting a DRX additional timer at a first symbol after the uplink resource and monitoring the DCI during a duration of the DRX additional timer, in response to the uplink resource being unavailable.

4. The method of claim 1, wherein in response to the uplink resource for transmitting the HARQ feedback information being unavailable, starting the DRX target timer and monitoring the DCI during the duration of the DRX target timer, comprises:
starting a DRX-HARQ-round-trip time (RTT) timer at a first symbol after the uplink resource in response to the uplink resource being unavailable; and
starting a DRX-retransmission timer and monitoring the DCI during a duration of the DRX-retransmission timer, in response to expiration of the DRX-HARQ-RTT timer.

5. The method of any of claims 1 to 4, wherein the DCI comprises:
first dedicated DCI containing an uplink grant;
second dedicated DCI containing a downlink assignment;
third dedicated DCI without the uplink grant and the downlink assignment; or
common DCI.

6. The method of any of claims 1 to 4, further comprising:
detecting a channel state of the uplink resource for transmitting the HARQ feedback information, and determining that the uplink resource is unavailable in response to the uplink resource being in a busy state; or
determining that the uplink resource is unavailable in response to the HARQ feedback information conflicting with another service on the uplink resource and the another service having a higher service priority than the HARQ feedback information.

7. The method of any of claims 1 to 4, further comprising:
transmitting the HARQ feedback information on the uplink resource indicated via the DCI in response to the DCI corresponding to the uplink resource for transmitting the HARQ feedback information being monitored.

8. An apparatus for monitoring downlink control information (DCI), comprising:
a processing module configured to start a discontinuous reception (DRX) target timer and monitor the DCI during a duration of the DRX target timer, in response to an uplink resource for transmitting hybrid automatic repeat request (HARQ) feedback information being unavailable.

9. The apparatus of claim 8, wherein the processing module is configured to monitor the DCI during DRX active time in response to the uplink resource being unavailable, wherein the DRX active time comprises time after the uplink resource.

10. The apparatus of claim 8, wherein the processing module is configured to start a DRX additional timer at a first symbol after the uplink resource and monitor the DCI during a duration of the DRX additional timer, in response to the uplink resource being unavailable.

11. The apparatus of claim 8, wherein the processing module is configured to:
start a DRX-HARQ-round-trip time (RTT) timer at a first symbol after the uplink resource in response to the uplink resource being unavailable; and
start a DRX-retransmission timer and monitor the DCI during a duration of the DRX-retransmission timer, in response to expiration of the DRX-HARQ-RTT timer.

12. The apparatus of any of claims 8 to 11, wherein the DCI comprises:
first dedicated DCI containing an uplink grant;
second dedicated DCI containing a downlink assignment;
third dedicated DCI without the uplink grant and the downlink assignment; or
common DCI.

13. The apparatus of any of claims 8 to 11, further comprising:
a detecting module configured to detect a channel state of the uplink resource for transmitting the HARQ feedback information; and
a determining module configured to:
determine that the uplink resource is unavailable in response to the uplink resource being in a busy state; or
determine that the uplink resource is unavailable in response to the HARQ feedback information conflicting with another service on the uplink resource and the another service having a higher service priority than the HARQ feedback information.

14. The apparatus of any of claims 8 to 11, further comprising:
a transmission module configured to transmit the HARQ feedback information on the uplink resource indicated via the DCI in response to the DCI corresponding to the uplink resource for transmitting the HARQ feedback information being monitored.

15. A terminal device, comprising:
a processor; and
a memory storing at least one instruction configured to be executed by the processor to implement the method for monitoring downlink control information (DCI) of any of claims 1 to 7.

16. A computer-readable storage medium storing at least one instruction configured to be executed by a processor to implement the method for monitoring downlink control information (DCI) of any of claims 1 to 7.

17. A chip comprising at least one of a programmable logic circuit and a program instruction, wherein when running, the chip is configured to implement the method for monitoring downlink control information (DCI) of any of claims 1 to 7.
